# EUROPEAN PATENT APPLICATION

(11) **EP 4 611 271 A1**
(43) Date of publication of application: **03.09.2025**
(21) Application number: 24832362.8
(22) Date of filing: 19.06.2024
(51) Int. Cl.: H04B 3/56, H02S 50/00

(54) **APPARATUS FOR MANAGING SOLAR MODULES**

(30) Priority: 28.06.2023 KR 20230083788
(71) Applicant: Hanwha Solutions Corporation, Jung-gu Seoul 04541 (KR)
(72) Inventor: KANG, Hyeon Min, Seoul 04541 (KR); KIM, Jeong Hwan, Seoul 04541 (KR); BANG, Young Gyun, Seoul 04541 (KR); LEE, Kang Min, Seoul 04541 (KR); KIM, Min Ho, Seoul 04541 (KR); GONG, Tae Su, Seoul 04541 (KR)
(74) Representative: Mooser, Sebastian Thomas
(86) International application number: PCT/KR2024/008482
(87) International publication number: WO 2025/005583

(57) **Abstract**

A device for managing photovoltaic modules according to one aspect includes: a communication unit for receiving a power line communication signal from at least one photovoltaic module array or transmitting the power line communication signal to the at least one photovoltaic module array; and a bypass unit forming a first communication path connecting the communication unit to the at least one photovoltaic module array, wherein the first communication path operates as an alternative path for a second communication path connecting the communication unit to the inverter.

## Description

### Technical Field

The present disclosure relates to a device for managing photovoltaic modules. More particularly, the present disclosure relates to a device for managing a plurality of photovoltaic module control devices included in a photovoltaic module array by using power line communication.

### Background Art

Photovoltaic power generation systems may periodically detect the voltage, current, and temperature of photovoltaic modules through a photovoltaic module control device connected to each of the photovoltaic modules, and provide the detected information to the outside through power line communication.

However, the photovoltaic power generation systems are configured to connect the inverter to the photovoltaic module control device in series, and thus, when the inverter is disconnected from the photovoltaic power generation systems, the path for power line communication is broken. In this case, information about the photovoltaic modules detected through the photovoltaic module control device cannot be identified from outside the photovoltaic power generation systems.

### Disclosure of Invention

### Technical Problem

The disclosure provides a device for managing photovoltaic modules. The technical problems to be achieved are not limited to the technical problems described above, and other technical problems may exist.

### Solution to Problem

A device for managing photovoltaic modules according to one aspect includes: a communication unit for receiving a power line communication signal from at least one photovoltaic module array or transmitting the power line communication signal to the at least one photovoltaic module array; and a bypass unit forming a first communication path connecting the communication unit to the at least one photovoltaic module array, wherein the first communication path operates as an alternative path for a second communication path connecting the communication unit to the inverter.

A device for managing photovoltaic modules according to another aspect includes: a communication unit for receiving a power line communication signal from at least one photovoltaic module array or transmitting the power line communication signal to the at least one photovoltaic module array; at least one first input/output port including a first positive electrode port connected to the at least one photovoltaic module array and the communication unit, and a first negative electrode port connected to the at least one photovoltaic module array and the inverter; at least one second input/output port including a second positive electrode port connected to the communication unit and the inverter, and a second negative electrode port connected to the inverter and the first negative electrode port; and at least one bypass unit forming the first communication path connecting the communication unit and the first negative electrode port, wherein the first communication path operates as an alternative path for a second communication path connecting the communication unit to the second positive electrode port.

### Advantageous Effects of Invention

Even when the inverter is disconnected from the photovoltaic power generation systems, a path for power line communication between the photovoltaic module array and the communication unit may be maintained. Accordingly, management of the plurality of photovoltaic module control devices included in the photovoltaic module array may be performed regardless of whether the inverter is disconnected or not.

Also, monitoring of the plurality of photovoltaic module control devices may be performed even when the inverter is disconnected from the photovoltaic power generation systems. Accordingly, installation or maintenance work of the photovoltaic power generation systems may be performed safely.

### Brief Description of Drawings

FIG. 1 and FIG. 2 are circuit diagrams illustrating an example of a photovoltaic module management device according to an embodiment.
FIG. 3 is a diagram illustrating an example of a flow of power line communication signals when an inverter is connected to photovoltaic power generation systems according to an embodiment.
FIG. 4 is a diagram illustrating an example of a flow of power line communication signals when an inverter is disconnected from photovoltaic power generation systems according to an embodiment.
FIG. 5 and FIG. 6 are diagrams illustrating an example of a power line communication process in the photovoltaic power generation systems to which the photovoltaic module management device is applied according to an embodiment.
FIG. 7 is a circuit diagram illustrating another example of a photovoltaic module management device according to an embodiment.
FIG. 8 is a diagram illustrating another example of a flow of power line communication signals when an inverter is connected to photovoltaic power generation systems according to an embodiment.
FIG. 9 is a diagram illustrating another example of a flow of power line communication signals when an inverter is disconnected from photovoltaic power generation systems according to an embodiment.
FIG. 10 is a diagram for explaining an example of power being supplied to a building in which photovoltaic modules are installed according to an embodiment.

### Best mode for Carrying out the Invention

A device for managing photovoltaic modules according to one aspect includes: a communication unit for receiving a power line communication signal from at least one photovoltaic module array or transmitting the power line communication signal to the at least one photovoltaic module array; and a bypass unit forming a first communication path connecting the communication unit to the at least one photovoltaic module array, wherein the first communication path operates as an alternative path for a second communication path connecting the communication unit to the inverter.

### Mode for the Invention

Although the terms used in the embodiments are selected, as much as possible, from general terms that are widely used at present, these terms may be replaced by other terms based on intentions of one of ordinary skill in the art, customs, emergence of new technologies, or the like. In a particular case, terms that are arbitrarily selected by the applicant may be used. In this case, the meanings of these terms may be described in corresponding parts of the embodiments. Therefore, it is noted that the terms used in this description is construed based on practical meanings thereof and the whole content of this description, rather than being simply construed based on names of the terms.

When a part of a description is referred to as being "include" a component, this does not mean that other components are excluded, but rather that other components may be included, unless described otherwise in the context. In addition, the terms, such as "~ unit" and "~ module," described in the description mean a unit that processes at least one function or operation and may be implemented in hardware or software, or a combination of hardware and software.

The terms that include ordinal numbers, such as "first" or "second," used in this description may be used to describe various components, but the components are not limited by the terms. These terms may be used to distinguish one component from another.

Hereinafter, a preferred embodiment of the present disclosure will be described with reference to the accompanying drawings. The description that will be described below with the accompanying drawings is to describe exemplary embodiments of the present disclose, and is not intended to describe the only embodiment in which the present disclose may be implemented. In order to clearly explain the present disclosure in the drawings, parts that are not related to the description may be omitted, and the same reference numerals may be used for identical or similar components throughout the specification.

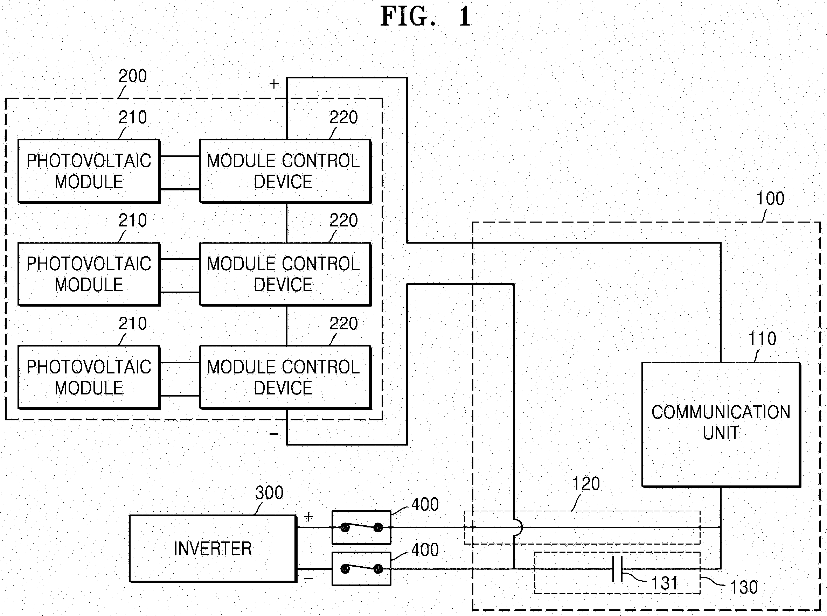

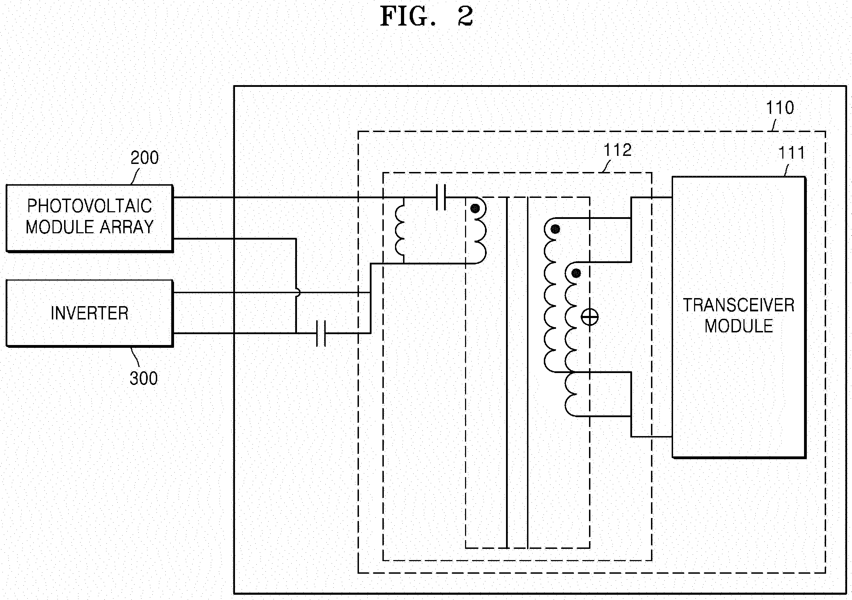

FIG. 1 and FIG. 2 are circuit diagrams illustrating an example of a photovoltaic module management device according to an embodiment.

Referring to FIG. 1 and FIG. 2, a photovoltaic module management device (hereinafter, module management device) 100 may include a communication unit 110, a connection unit 120, and a bypass unit 130. However, the module management device 100 may include other components in addition to the components illustrated in FIG. 1 and FIG. 2. Alternatively, the module management device 100 may omit some of the components illustrated in FIG. 1 and FIG. 2.

The module management device 100 may be a device for managing the plurality of photovoltaic module control devices (hereinafter, module control devices) 220 included in the plurality of photovoltaic modules 210 included in the photovoltaic module array 200. For example, the module management device 100 may be a kind of master unit for managing the plurality of module control devices 220.

The photovoltaic module array 200 may include the plurality of photovoltaic modules 210. The plurality of photovoltaic modules 210 included in the photovoltaic module array 200 may be connected to each other in series or in parallel. The module control device 220 may be connected to each of the plurality of photovoltaic modules 210 included in the photovoltaic module array 200. In FIG. 1, a single photovoltaic module array 200 is illustrated, but is not limited thereto. In other words, according to the design of the photovoltaic power generation systems, two or more photovoltaic module array 200 may be included in the photovoltaic power generation systems.

The module control device 220 may detect information (e.g., voltage, current, temperature, etc.) related to the photovoltaic modules 210 and transmit the detected information to the outside (e.g., module management device 100) through power line communication. In some embodiments, the module control device 220 may receive a rapid shutdown (RSD) signal transmitted from the outside (e.g., module management device 100) through power line communication and may stop the operation of the photovoltaic modules 210 when the rapid shutdown signal is received.

For example, the module control device 220 may be implemented as a module level power conversion device (or Module Level Power Electronic device) (hereinafter referred to as "MLPE"). The module control device 220 may perform various functions, such as a voltage monitoring function, a current monitoring function, a power monitoring function, a temperature monitoring function, and a rapid shutdown function, to optimize the power generation performance of the photovoltaic modules 210. For example, the module control device 220 may also be referred to as an MLPE or a rapid shutdown (RSD) device.

For example, an MLPE may be an optimizer or a micro inverter.

As an example, when the MLPE is the optimizer, photovoltaic power generation systems may include a single inverter. In this case, a single MLPE may be connected to a single photovoltaic module, and the MLPE may optimize the power output from a single photovoltaic module and output it to a single inverter (e.g., a string inverter). The power converted by the inverter (e.g., converting direct current power into alternating current power) may be output to a load or grid.

As another example, when the MLPE is a microinverter, a single MLPE may be connected to a single photovoltaic module. In this case, the MLPE may convert the power generated from a single photovoltaic module, and the converted power may be output to a load or grid.

The module control devices 220 may be included in the photovoltaic modules 210. For example, the module control devices 220 may be provided on the back of the photovoltaic panel of the photovoltaic modules 210. The module control devices 220 may be electrically connected to the photovoltaic panel of the photovoltaic modules 210 to control the size of the generated current or generated voltage by the photovoltaic panel. The photovoltaic panel may include a plurality of photovoltaic cells. For example, a photovoltaic panel may be referred to as a solar panel or solar cell.

The communication unit 110 may be a device for performing communication between the module control device 220, the inverter 300 and the module management device 100. The communication unit 110 may be connected to the photovoltaic module array 200 and the inverter 300 to perform power line communication. The communication unit 110 may transmit a power line communication signal (e.g., rapid shutdown signal) to the module control device 220 included in the photovoltaic module array 200. In some embodiments, the communication unit 110 may receive a power line communication signal (e.g., a signal for information related to the photovoltaic modules 210) transmitted from the module control devices 220 included in the photovoltaic module array 200.

As shown in FIG. 2, the communication unit 110 may include a transceiver module 111 and a coupling module 112. However, the components of the communication unit 110 are not limited to those shown in FIG. 2, and other components may be included.

The transceiver module 111 may include a transceiver and a control device that controls the transceiver. For example, the transceiver module 111 may be a power line communication modem and may perform modulation/demodulation and transmission/reception of power line communication signals. The coupling module 112 may include a coupling transformer that combines and disconnects a power signal and a power line communication signal with or from each other, and a coupling capacitor that is directly connected to the coupling transformer and forms an LC filter.

The communication unit 110 may be connected to a processor configured to control the communication unit 110. The processor may receive a power line communication signal (e.g., a signal for information related to photovoltaic modules 210) through the communication unit 110 and process (store and manage) the received power line communication signal. The processor may generate a power line communication signal (e.g., rapid shutdown signal) when a preset condition is satisfied or when a user input is received, and transmit the generated power line communication signal to the outside (e.g., photovoltaic module array 200).

For example, the processor may process commands of a computer program by performing basic arithmetic, logic, and input/output operations. In this regard, the command may be provided from the memory or an external device. In some embodiments, the processor may generally control the operation of other components included in the communication unit 110.

In some embodiments, the processor may perform at least some of the data analysis, processing, and result information generation for performing the above described operations by using at least one of a machine learning, neural network, or deep learning algorithm as a rule-based or artificial intelligence algorithm. Examples of neural networks are models such as Convolutional Neural Network (CNN), Deep Neural Network (DNN), and Recurrent Neural Network (RNN).

For example, the processor may be implemented as an array of a number of logic gates, or may be implemented as a combination of a general purpose microprocessor and a memory storing a program that may be executed on the microprocessor. For example, the processor may include a general purpose processor, a central processing unit (CPU), a microprocessor, a digital signal processor (DSP), a controller, a microcontroller, a state machine, and the like. In some environments, the processor 110 may include an application specific integrated circuit (ASIC), a programmable logic device (PLD), a field programmable gate array (FPGA), and the like. For example, the processor 110 may refer to a combination of processing devices, such as a combination of a digital signal processor (DSP) and a microprocessor, a combination of a plurality of microprocessors, a combination of one or more microprocessors combined with a digital signal processor (DSP) core, or a combination of any other such configurations.

Referring back to FIG. 1, the connection unit 120 may connect the communication unit 110 to the inverter 300. The connection unit 120 may electrically connect one end of the communication unit 110 to the positive electrode of the inverter 300 through a power line. More particularly, a switch 400 that controls the connection of the inverter 300 may be connected to the positive electrode of the inverter 300, and the connection unit 120 may be configured to connect the communication unit 110 to the switch 400.

In the above described embodiment, the switch 400 is described as being provided outside the inverter 300, but the switch 400 may be provided inside the inverter 300. For example, the switch 400 may be provided on both the positive electrode and negative electrode of the inverter 300, but is not limited thereto. In other words, the switch 400 may be provided on only one of the positive electrode and negative electrode of the inverter 300.

The bypass unit 130 may connect the communication unit 110 to the photovoltaic module array 200. The bypass unit 130 may electrically connect one end of the communication unit 110 to the negative electrode of the photovoltaic module array 200.

The communication path formed by the bypass unit 130 may correspond to an alternative path for the communication path formed by the connection unit 120. In other words, the first communication path in which the communication unit 110 and the photovoltaic module array 200 are connected by the bypass unit 130 may operate as an alternative path for the second communication path in which the communication unit 110 and the inverter 300 are connected by the connection unit 120.

For example, when the inverter 300 is disconnected from the photovoltaic power generation systems, the bypass unit 130 may connect the photovoltaic module array 200 to the communication unit 110 and form a closed circuit. The bypass unit 130 connects the photovoltaic module array 200 to the communication unit 110 to each other when the inverter 300 is disconnected from the photovoltaic power generation systems, thereby enabling power line communication between the photovoltaic module array 200 and the communication unit 110.

For example, the bypass unit 130 may include an alternating current (AC) coupling capacitor 131 that allows the power line communication signal to pass through. An AC coupling capacitor 131 may allow the power line communication signal transmitted through a power line to pass through and block a power signal transmitted through a power line. That is, an AC coupling capacitor 131 may allow an AC signal flowing through a power line to pass through and block a DC signal flowing through a power line.

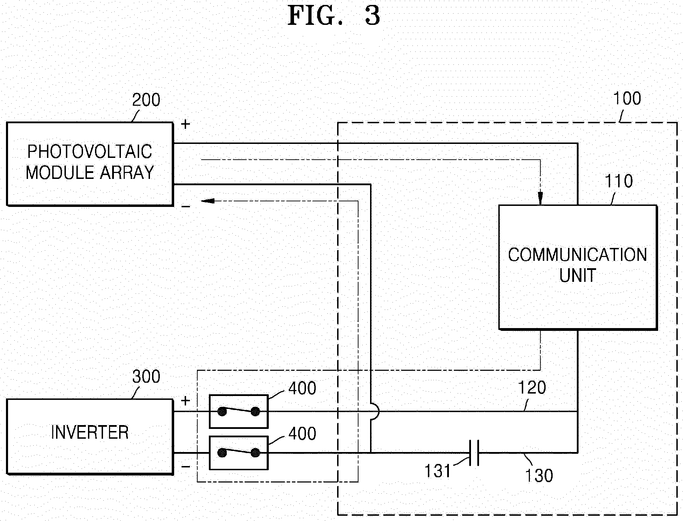

FIG. 3 is a diagram illustrating an example of a flow of power line communication signals when an inverter is connected to photovoltaic power generation systems according to an embodiment.

Referring to FIG. 3, when the inverter 300 is normally connected to the photovoltaic power generation systems, the power line communication signal may flow as indicated by the arrow. In other words, when the inverter 300 is connected to the photovoltaic power generation systems, the power line communication signal may be transmitted to and received from through the second communication path. For example, when the switch 400 connected to the inverter 300 is in the ON status, the power line communication signal may flow through the power line communication path (i.e., the second communication path) formed in the order of one of the positive electrode and negative electrode of the photovoltaic module array 200 (e.g., the positive electrode) - communication unit 110 - inverter 300 - the other of the positive electrode and negative electrode of the photovoltaic module array 200 (e.g., the negative electrode).

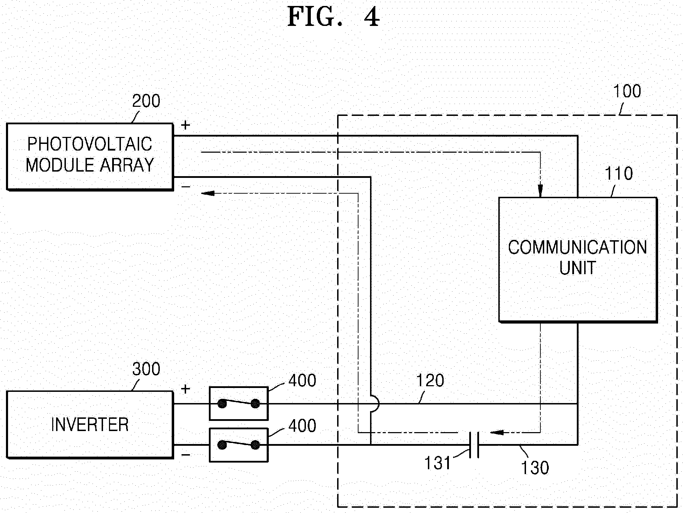

FIG. 4 is a diagram illustrating an example of a flow of power line communication signals when an inverter is disconnected from photovoltaic power generation systems according to an embodiment.

Referring to FIG. 4, when the inverter 300 is disconnected from the photovoltaic power generation systems, the power line communication signal may flow as indicated by the arrow. In other words, when the inverter 300 is disconnected from the photovoltaic power generation systems, the power line communication signal may be transmitted to and received from through the first communication path. For example, when the switch 400 connected to the inverter 300 is in the OFF status, the power line communication signal may flow through the power line communication path (i.e., the first communication path) formed in the order of one of the positive electrode and negative electrode of the photovoltaic module array 200 (e.g., the positive electrode) - communication unit 110 - the other of the positive electrode and negative electrode of the photovoltaic module array 200 (e.g., the negative electrode).

As described above, the module management device 100 according to an embodiment maintains a power line communication path with the photovoltaic module array 200 even when the inverter 300 is disconnected from the photovoltaic power generation systems, thereby enabling management of the plurality of module control devices 220 included in the photovoltaic module array 200 to be performed regardless of whether the inverter 300 is disconnected or not.

In addition, the present embodiment maintains the power line communication path with the photovoltaic module array 200 even when the inverter 300 is disconnected from the photovoltaic power generation systems, thereby enabling monitoring of the module control device 220 to be performed even when the inverter 300 is disconnected from the photovoltaic power generation systems. Accordingly, installation or maintenance work of the photovoltaic power generation systems may be performed safely.

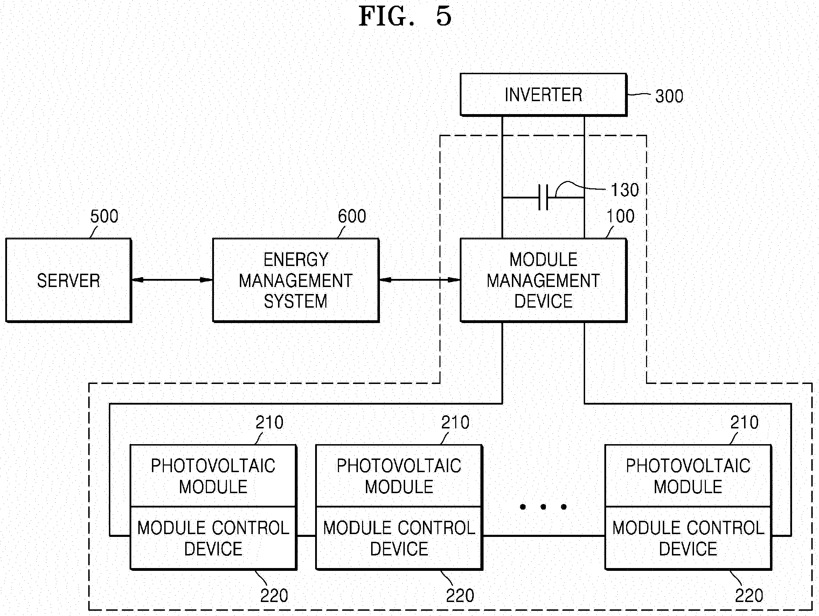

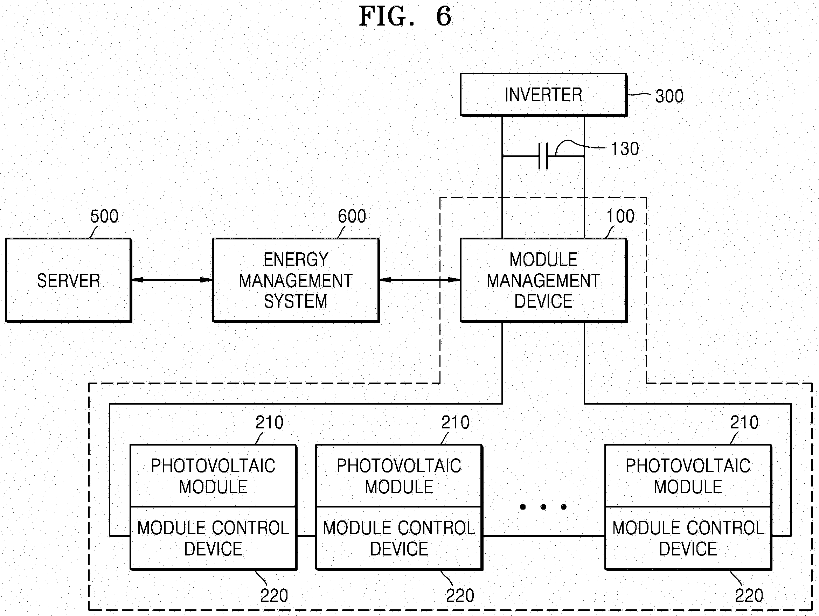

FIG. 5 and FIG. 6 are diagrams illustrating an example of a power line communication process in the photovoltaic power generation systems to which the photovoltaic module management device is applied according to an embodiment.

Referring to FIG. 5 and FIG. 6, the photovoltaic power generation systems may include the module management device 100, the plurality of photovoltaic modules 210, the plurality of module control devices 220, the inverter 300, a server 500, and an energy management system (EMS) 600. However, the photovoltaic power generation systems may include other components in addition to the components illustrated in FIG. 5 and FIG. 6. Alternatively, the photovoltaic power generation systems may omit some of the components illustrated in FIG. 5 and FIG. 6.

The server 500 may generate a control signal for controlling the photovoltaic modules 210 according to user input and transmit the control signal to the energy management system 600. In some embodiments, the server 500 may receive a signal (e.g., monitoring signal, etc.) transmitted from the energy management system 600 and provide the received signal to the user.

The energy management system 600 may receive a control signal transmitted from the server 500 and transmit the received control signal to the module management device 100. The energy management system 600 may receive a signal (e.g., monitoring signal, etc.) transmitted from the module management device 100 and transmit the received signal to the server 500.

The module management device 100 may receive the control signal transmitted from the energy management system 600 and transmit the received control signal to the module control device 220. The module management device 100 may receive a signal (e.g., monitoring signal, etc.) transmitted from the module control device 220 and transmit the received signal to the energy management system 600.

When the inverter 300 is connected to the photovoltaic power generation systems, the power line communication path indicated by a dotted line in FIG. 5 may be formed. The module management device 100 may transmit and receive signals through the power line communication path indicated by the dotted line in FIG. 5 when the inverter 300 is connected to the photovoltaic power generation systems.

In some embodiments, when the inverter 300 is disconnected from the photovoltaic power generation systems, the power line communication path indicated by a dotted line in FIG. 6 may be formed. That is, when the inverter 300 is disconnected from the photovoltaic power generation systems, the power line communication path may be formed excluding the inverter 300. The module management device 100 may transmit and receive signals through the power line communication path indicated by the dotted line in FIG. 6 when the inverter 300 is disconnected from the photovoltaic power generation systems.

In this way, the present embodiment enables communication between the server 500, the energy management system 600, the module management device 100, and the photovoltaic module array (i.e., the plurality of photovoltaic modules 210 and the plurality of module control devices 220) regardless of whether the inverter 300 is disconnected from the photovoltaic power generation systems. Accordingly, the safety of photovoltaic power generation systems may be improved.

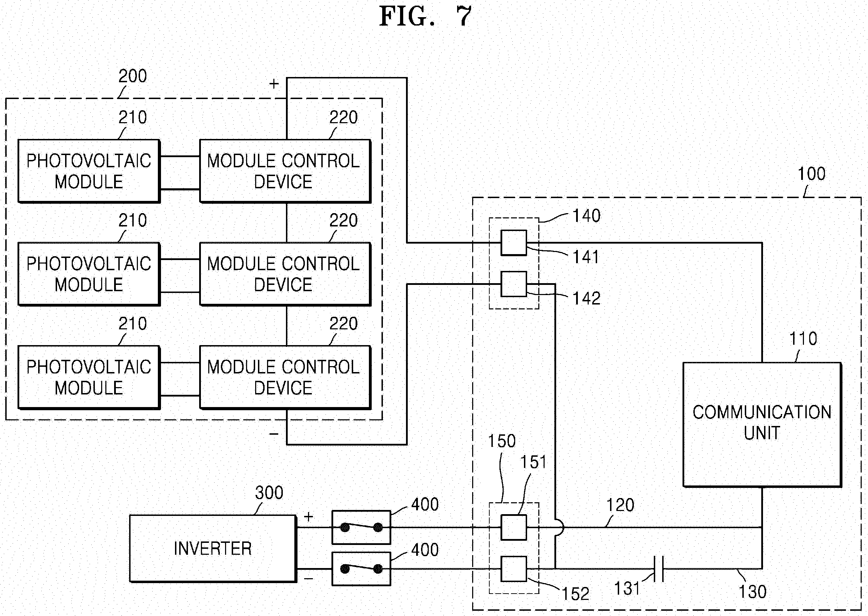

FIG. 7 is a circuit diagram illustrating another example of a photovoltaic module management device according to an embodiment.

Referring to FIG. 7, the module management device 100 may include the communication unit 110, the connection unit 120, the bypass unit 130, a first input/output port 140, and a second input/output port 150. For example, the module management device 100 illustrated in FIG. 7 may further include the first input/output port 140 and the second input/output port 150 in addition to the module management device 100 illustrated in FIG. 1. Hereinafter, detailed descriptions of components included in FIG. 7 that are identical to those in FIG. 1 will be omitted.

The first input/output port 140 may include a first positive electrode port 141 and a first negative electrode port 142. The first positive electrode port 141 may be configured to be connected to the positive electrode of the photovoltaic module array 200 and the communication unit 110.

For example, the first positive electrode port 141 and the positive electrode of the photovoltaic module array 200 may be connected through the power line. The first negative electrode port 142 may be configured to be connected to the negative electrode of the photovoltaic module array 200 and the inverter 300. The first negative electrode port 142 and the negative electrode of the photovoltaic module array 200 may be connected through the power line.

The second input/output port 150 may include a second positive electrode port 151 and a second negative electrode port 152. The second positive electrode port 151 may be configured to be connected to the positive electrode of the inverter 300 and the communication unit 110.

For example, the second positive electrode port 151 and the positive electrode of the inverter 300 may be connected through the power line. The second negative electrode port 152 may be configured to be connected to the negative electrode of the inverter 300 and the first negative electrode port 142. The second negative electrode port 152 and the negative electrode of the inverter 300 may be connected through the power line.

For example, the first and second input/output ports 140 and 150 may be implemented through one connector or may be implemented through separate connectors.

The connection unit 120 may be configured to connect the communication unit 110 to the second positive electrode port 151. The connection unit 120 may electrically connect one end of the communication unit 110 to the second positive electrode port 151 through the power line. That is, the communication unit 110 and the second positive electrode port 151 may be connected to each other through the connection unit 120.

The bypass unit 130 may be configured to connect the communication unit 110 to the first negative electrode port 142. The bypass unit 130 may electrically connect one end of the communication unit 110 to the first negative electrode port 142 through the power line. The bypass unit 130 may correspond to an alternative path for the connection unit 120. In other words, the first communication path in which the communication unit 110 and the first negative electrode port 142 are connected by the bypass unit 130 may operate as an alternative path for the second communication path in which the communication unit 110 and the second positive electrode port 151 are connected by the connection unit 120.

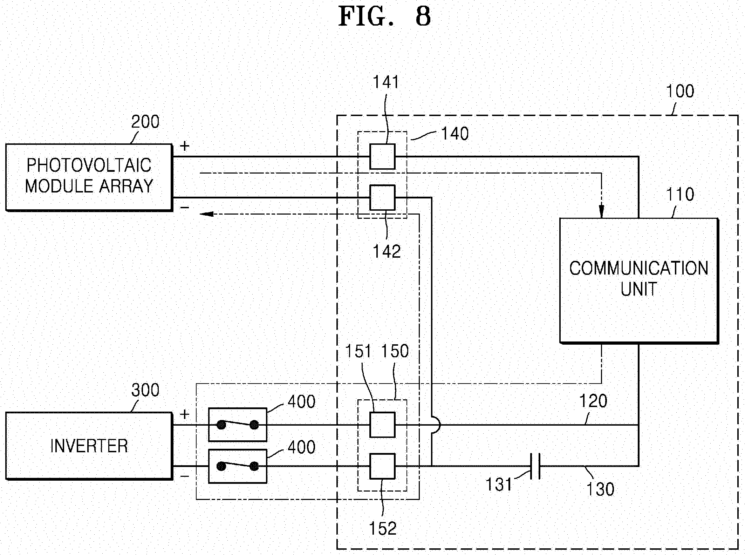

FIG. 8 is a diagram illustrating another example of a flow of power line communication signals when an inverter is connected to photovoltaic power generation systems according to an embodiment.

Referring to FIG. 8, when the inverter 300 is normally connected to the photovoltaic power generation systems, the power line communication signal may flow as indicated by the arrow. In other words, when the inverter 300 is connected to the photovoltaic power generation systems, the power line communication signal may be transmitted to and received from through the second communication path. For example, when the switch 400 connected to the inverter 300 is in the ON status, the power line communication signal may flow through the power line communication path (i.e., the second communication path) formed in the order of one of the positive electrode and negative electrode of the photovoltaic module array 200 (e.g., the positive electrode) - the first positive electrode port 141 - communication unit 110 - the second positive electrode port 151 - inverter 300 - the second negative electrode port 152 - the first negative electrode port 142 - the other of the positive electrode and negative electrode of the photovoltaic module array 200 (e.g., the negative electrode).

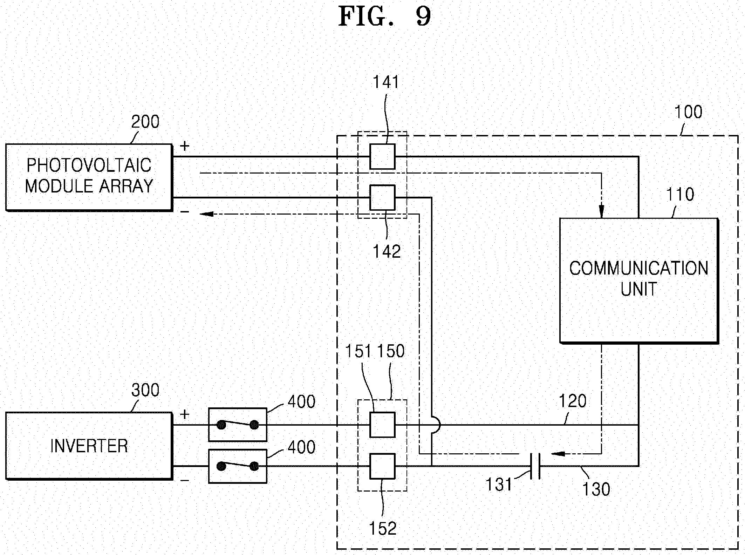

FIG. 9 is a diagram illustrating another example of a flow of power line communication signals when an inverter is disconnected from photovoltaic power generation systems according to an embodiment.

Referring to FIG. 9, when the inverter 300 is disconnected from the photovoltaic power generation systems, the power line communication signal may flow as indicated by the arrow. In other words, when the inverter 300 is disconnected from the photovoltaic power generation systems, the power line communication signal may be transmitted to and received from through the first communication path. For example, when the switch 400 connected to the inverter 300 is in the OFF status, the power line communication signal may flow through the power line communication path (i.e., the first communication path) formed in the order of one of the positive electrode and negative electrode of the photovoltaic module array 200 (e.g., the positive electrode) - the first positive electrode port 141 - communication unit 110 - the first negative electrode port 142 - the other of the positive electrode and negative electrode of the photovoltaic module array 200 (e.g., the negative electrode).

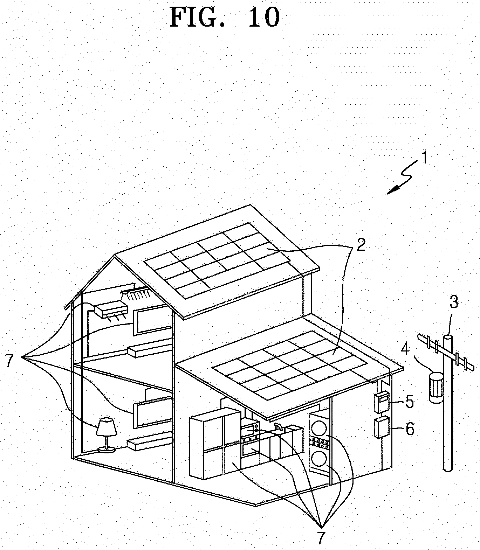

FIG. 10 is a diagram for explaining an example of power being supplied to a building in which photovoltaic modules are installed according to an embodiment.

Referring to FIG. 10, photovoltaic modules 2 may be installed on the roof of a building to generate power. The photovoltaic modules 2 may form at least one photovoltaic module array.

The inverter 6 may convert power generated from photovoltaic modules 2 and supply it to a building 1.

In some embodiments, commercial power transmitted through the power pole 3 may be supplied to the building through the transformer 4.

A plurality of home appliances 7 may be operated by selectively receiving at least one of commercial power or power generated by photovoltaic modules 2. The power meter 5 may measure the amount of power consumed in the building 1.

In some embodiments, when a separate energy storage system (ESS) is installed in the building 1, the power generated from the photovoltaic modules 2 may be stored in the energy storage system.

The photovoltaic modules 2 may form at least one photovoltaic module array. For example, the photovoltaic module array may include one output terminal.

In some embodiments, the photovoltaic modules 2 may include MLPE.

For example, the MLPE device may monitor the status or power generation of photovoltaic modules 2 and transmit data to an external device. In some embodiments, the MLPE may perform a rapid shutdown, and stop the operation of the photovoltaic module according to a degree of malfunction of the photovoltaic module.

In some embodiments, at least one of the photovoltaic modules 2 and the MLPEs may include a communication module for power line communications.

As described above, the module management device 100 according to an embodiment maintains a power line communication path with the photovoltaic module array 200 even when the inverter 300 is disconnected from the photovoltaic power generation systems, thereby enabling stable management of the plurality of module control devices 220 included in the photovoltaic module array 200 to be performed regardless of whether the inverter 300 is disconnected or not.

In some embodiments, the module management device 100 according to an embodiment maintains a power line communication path with the photovoltaic module array 200 even when the inverter 300 is disconnected from the photovoltaic power generation systems, thereby performing monitoring of the module control device 220 while the inverter 300 is disconnected from the photovoltaic power generation systems. Accordingly, installation or maintenance work of the photovoltaic power generation systems may be performed safely.

The implementations described in the present description may be implemented, for example, as a method or process, a device, a software program, a data stream or a signal. Even if discussed only in the context of a single form of implementation (e.g., discussed only as a method), the implementation of the discussed feature may also be implemented in other forms (e.g., as a device or a program). The device may be implemented as appropriate hardware, software and firmware.

The present disclosure has been described with reference to the embodiments illustrated in the drawings, but these are merely exemplary, and it will be understood by those of ordinary skill in the art that various changes and other equivalent embodiments are possible from the above embodiments. Therefore, the scope of the present disclosure should be defined by the following claims.

## Claims

1. A device for managing a photovoltaic module, the device comprising:
a communication unit for receiving a power line communication signal from at least one photovoltaic module array or transmitting a power line communication signal to the at least one photovoltaic module array; and
a bypass unit forming a first communication path connecting the communication unit to the at least one photovoltaic module array, wherein the first communication path operates as
an alternative path for a second communication path connecting the communication unit to an inverter.

2. The device of claim 1, wherein
when the inverter is connected to a photovoltaic power generation system, the power line communication signal is transmitted to and received from through the second communication path, and when the inverter is disconnected from a photovoltaic power generation system, the power line communication signal is transmitted to and received from through the first communication path.

3. The device of claim 2, wherein
the second communication path is formed by sequentially connecting
one of a positive electrode and negative electrode of the at least one photovoltaic module array, the communication unit, the inverter and the other of the positive electrode and negative electrode of the at least one photovoltaic module array.

4. The device of claim 2, wherein
the first communication path is formed by sequentially connecting one of a positive electrode and negative electrode of the at least one photovoltaic module array, the communication unit, the bypass unit and the other of the positive electrode and negative electrode of the at least one photovoltaic module array.

5. The device of claim 1, wherein
the bypass unit comprises
an alternating current (AC) coupling capacitor that allows the power line communication signal to pass through.

6. The device of claim 1, wherein
the communication unit comprises:
a power line communication modem;
a coupling transformer which is connected to the power line communication modem and which combines or disconnects the power line communication signal and the power signal with or from each other; and
a coupling capacitor is connected to the coupling transformer and forms an LC filter.

7. The device of claim 1, wherein
the photovoltaic module array comprises:
photovoltaic modules; and
module level power electronic devices connected to the photovoltaic modules,
wherein the photovoltaic modules are connected to the module level power electronic devices, respectively.

8. The device of claim 7, wherein
each of the module level power electronic devices comprises an optimizer or a micro inverter.

9. A device for managing a photovoltaic module comprising:
a communication unit for receiving a power line communication signal from at least one photovoltaic module array or transmitting a power line communication signal to the at least one photovoltaic module array;
at least one first input/output port including a first positive electrode port connected to the at least one photovoltaic module array and the communication unit, and a first negative electrode port connected to the at least one photovoltaic module array and an inverter;
at least one second input/output port including a second positive electrode port connected to the communication unit and the inverter, and a second negative electrode port connected to the inverter and the first negative electrode port; and
at least one bypass unit forming the first communication path connecting the communication unit and the first negative electrode port,
wherein the first communication path operates as
an alternative path for a second communication path connecting the communication unit to the second positive electrode port.

10. The device of claim 9, wherein
when the inverter is connected to a photovoltaic power generation system, the power line communication signal is transmitted to and received from through the second communication path, and when the inverter is disconnected from a photovoltaic power generation system, the power line communication signal is transmitted to and received from through the first communication path.

11. The device of claim 10, wherein
the second communication path is formed by sequentially connecting
one of the positive electrode and negative electrode of the at least one photovoltaic module array, the first positive electrode port, the communication unit, the second positive electrode port, the inverter, the second negative electrode port, the first negative electrode port, and the other of the positive electrode and negative electrode of the at least one photovoltaic module array.

12. The device of claim 10, wherein
the first communication path is formed by sequentially connecting one of a positive electrode and negative electrode of the at least one photovoltaic module array, the first positive electrode port, the communication unit, the bypass unit, the first negative electrode port, and the other of the positive electrode and negative electrode of the at least one photovoltaic module array.

13. The device of claim 9, wherein
the bypass unit comprises
an alternating current (AC) coupling capacitor that allows the power line communication signal to pass through.

14. The device of claim 9, wherein
the communication unit comprises:
a power line communication modem;
a coupling transformer which is connected to the power line communication modem and which combines or disconnects the power line communication signal and the power signal with or from each other; and
a coupling capacitor which is connected to the coupling transformer and forms an LC filter.

15. The device of claim 9, wherein
the photovoltaic module array comprises:
photovoltaic modules; and
module level power electronic devices which are connected to the photovoltaic modules,
wherein the photovoltaic modules is connected to the module level power electronic devices, respectively.

16. The device of claim 15, wherein
the module level power electronic devices each comprises
an optimizer or a micro inverter.
